# EUROPEAN PATENT APPLICATION

(11) **EP 1 439 539 A2**
(43) Date of publication of application: **21.07.2004**
(21) Application number: 04009812.1
(22) Date of filing: 22.06.1999
(51) Int. Cl.: G11B 27/034

(54) **Method and apparatus for recording data production, method and apparatus for recording medium reproduction, recording medium, to support manufacturer specific information**

(30) Priority: 22.06.1998 KR 9823487; 29.07.1998 KR 9830753
(62) Divisional of application: 99304887.5
(71) Applicant: Samsung Electronics Co., Ltd., Suwon-si, Gyeonggi-do (KR)
(72) Inventor: Moon, Seong-jin, Seoul (KR); Oh, Young-nam, Sungnam-city Kyungki-do (KR); Chung, Tae-yun, Gwachun-city Kyungki-do (KR); Kang, Jung-suk 101-1310 Gunyoung, Seoul (KR); Park, Pan-gie, Suwon-city Kyungki-do (KR)
(74) Representative: Waddington, Richard

(57) **Abstract**

A recording medium and a recording apparatus for storing manufacturer information for supporting specific functions for each manufacturer and a method therefor are provided. A reproducing apparatus for reproducing manufacturer information for supporting specific functions and a method therefor is also provided. If a recording apparatus modifies the contents of the recording medium, then it should record its manufacturer's identification code. A recording apparatus/ reproducing apparatus should check the identification code on the recording medium before using its own manufacture information item for some specific function. Also, it is possible to reduce the time required to determine whether the manufacturer information items are effective.

## Description

The present invention relates to the fields of optical recording and reproduction (recording/reproduction) of video and/or audio data, and more particularly, to a recording medium and a recorder for storing identification information of the manufacturer of the recorder which modifies the contents of the recording medium, and a recorder and/or a player which have the manufacturer specific information and a method therefor.

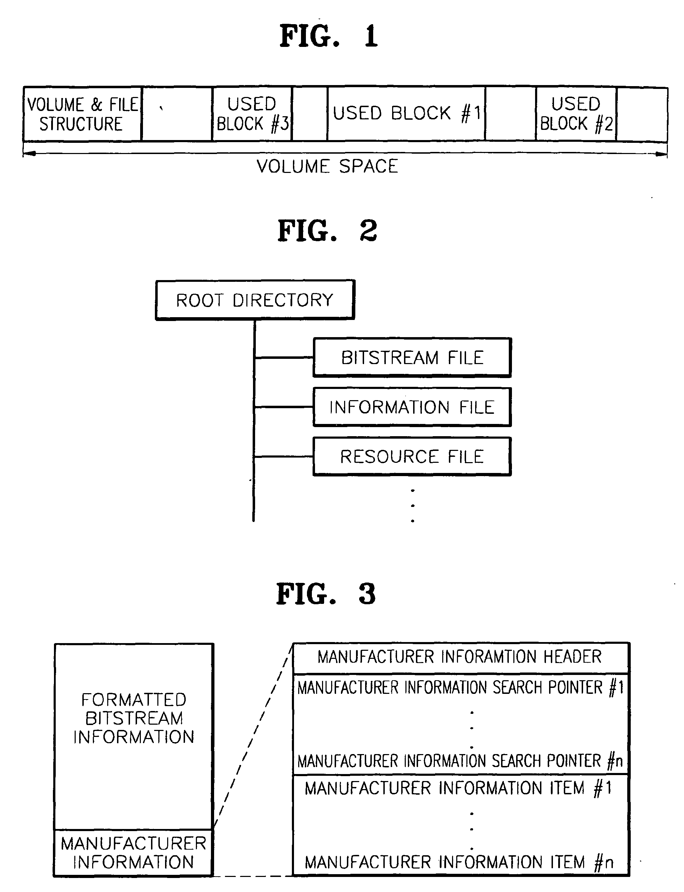

Figure 1 shows a one dimensional structure of a general recording medium, a volume space which is the entire recording medium is comprised of a volume and file structure area and areas in which real data is recorded (used blocks #1, #2, and #3). Real data can be recorded in a physically scattered state by editing in predetermined unit such as a program or a title. General information on the disc and information on the structures of a file and a directory, as shown in Figure 2, are recorded in the volume and file structure area.

Figure 2 shows files existing on a file system used for an apparatus for recording and reproducing audio and/or video (A/V) data on a rewritable recording medium. A bitstream file is a file on which real A/V data is recorded. An information file is a file having information on the bitstream file. There may be also a resource file.

Figure 3 shows the contents of the information file shown in Figure 2 The contents can be classified into formatted information on the bitstream having a common format among manufacturers and manufacturer (specific) information which has an individual format which is not compatible between manufacturers. The formatted information which includes information for having a common function regardless of the manufacturer is necessary to maintain compatibility. For example, the formatted information has information on the starting position of a specific title in the bit-stream file and information on the position corresponding to a specific time interval. The recorder and/or player obtains information on which position in the bit-stream file is to be recorded and which position is to be reproduced through the formatted information and records/reproduces the bitstream file on the basis of the obtained information.

The manufacturer information that is used by each manufacturer to support specific functions of the respective manufacturer does not need to be compatible. For example, a function of recording information on the finally reproduced position in the bitstream file as the manufacturer information item and automatically reproducing from a position next to the finally reproduced position when the recording medium is reproduced later can be an example of the specific function using manufacturer information. The specific function is supported only in the recording medium recorder/player which can support the manufacturer information.

In detail, the contents of the manufacturer information are comprised of a manufacturer information header, for example, having information on the number of items (n) of the manufacturer information, the same numbers of manufacturer information search pointers having information on the positions of the respective item of the manufacturer information (manufacturer information search pointer #1, ..., manufacturer information search pointer #n), and the respective manufacturer information items (manufacturer information item #1, .. manufacturer information item #n). A recorder/player of each manufacturer is expected to have at most one manufacturer information item.

The contents of the manufacturer information item can be understood and utilized only in the recorder/player of the specific manufacturer which generated the manufacturer information items and are not compatible between the recorders/players of other manufacturers.

As mentioned above, since the information for the specific function of the individual manufacturer is not compatible, if additional recording/deleting processes are performed by the recorder/editor manufactured by a manufacturer B on a recording medium having the manufacturer information generated by a manufacturer A, the manufacturer information of the manufacturer A may not be effective any longer. Since the manufacturer information is unique to the manufacturer A, only the manufacturer A can analyze and modify the information. Thus, the manufacturer B cannot modify or manage information of manufacturer A's information. When a recording medium of which the contents are modified returns to the recorder/player of the manufacturer A for more recording or reproducing, a mis-operation can occur since the information item in which the information for the specific function set by the manufacturer A may not be effective any longer. Therefore, a check should always be made as to whether the manufacturer information is effective before using the manufacturer information made by the manufacturer A when a recording medium is newly loaded into a recorder/player of the manufacturer A. Verification processes are complicated and it can take a long time to perform the processes when there is a large amount of recorded A/V data.

It is a first aim of embodiments of the present invention to provide a recording medium for storing manufacturer information for a specific function of recorders/players of different manufacturers.

It is a second aim of embodiments of the present invention to provide a recording medium for storing the identification information of the manufacturer of which a recorder/editor finally performs recording/deleting on the recording medium.

It is a third aim of embodiments of the present invention to provide a recorder/editor and method for storing the manufacturer information for the specific function of the recorder/editor of each different manufacturer on the recording medium.

It is a fourth aim of embodiments of the present invention to provide a recorder/editor and method for storing the identification information of the manufacturer of which the recorder/editor performs recording/deleting on the recording medium.

It is a fifth aim of embodiments of the present invention to provide a recorder/a player and method for using the manufacturer information for the specific function of the recorders/players of each different manufacturer on the recording medium.

It is a sixth aim of embodiments of the present invention to provide a recorder/player and method for checking whether the identification information of the manufacturer of which a recorder/editor finally performs recording/deleting on the recording medium is the same as the identification information of the manufacturer of the recorder/player to determine whether the manufacturer information is effective or not. That is, if the two identification information are the same, then the manufacturer information item is effective. If not, the manufacturer information item may be not effective, thus requiring complete verification.

According to the present invention there is provided an apparatus and method as set forth in the appended claims. Preferred features of the invention will be apparent from the dependent claims, and the description which follows.

According to a first aspect of the invention, there is provided a recording apparatus for recording and/or editing audio, video, and/or information data on a rewritable recording medium, the apparatus comprising: a recording controller for producing A/V contents, formatted information for the A/V contents and manufacturer information to support manufacturer specific functions, wherein the manufacturer information comprises a manufacturer identification code designating the manufacturer of the recording apparatus that last modified the content of the recording medium.

Preferably, the manufacturer information further comprises the identification code of the product which last modified the content of the recording medium.

Preferably, the manufacturer information has a maximum number of manufacturer information items and if the number of manufacturer information items exceeds the maximum number, then the recording controller deletes the oldest manufacturer information item.

According to a second aspect of the invention, there is provided a recording apparatus which records A/V contents on a recording medium, wherein the recording apparatus is arranged to record a manufacturer identification code on the recording medium designating the manufacturer of the recording apparatus when the recording apparatus modifies the A/V contents.

According to a third aspect of the invention there is provided a reproducing apparatus for reproducing audio, video, and/or information data on a rewritable recording medium, comprising: a reproducing controller for reproducing A/V contents, formatted information for the A/V contents and manufacturer information to support manufacturer specific functions, wherein the manufacturer information comprises an identification code corresponding to the manufacturer of the recording apparatus that last modified the content of the recording medium.

Preferably, the manufacturer information further comprises the product identification code of the recording apparatus which last modified the content of the recording medium.

According to a fourth aspect of the invention, there is provided a reproducing apparatus which reproduces A/V contents and information on a recording medium, wherein the reproducing apparatus checks a manufacturer identification code recorded on the recording medium, said manufacturer identification code being arranged to designate the particular manufacturer of a product which was last used to modify the A/V contents on the recording medium.

According to a fifth aspect of the invention, there is provided a method for recording and/or editing audio, video, and/or information data on a rewritable recording medium, comprising the step of: recording the identification code of the manufacturer of a recording apparatus which last modified the contents of the recording medium by performing recording/editing on the recording medium.

The method may further comprise the step of: recording a product identification code corresponding to a recording apparatus product of a manufacturer, which last modified the contents of the recording medium by performing recording/ editing on the recording medium.

According to a sixth aspect of the invention, there is provided a method in a recording apparatus/a reproducing apparatus for recording/reproducing audio, video, and/or information data on a rewritable recording medium using manufacturer information recorded on the recording medium, the method comprising the step of: checking whether there is coincidence between a recorded manufacturer identification code designating the manufacturer of equipment which was last used to modify the contents of the recording medium and its own manufacturer identification code to determine whether manufacturer specific information recorded on the recording medium is effective.

The method may further comprise the step of: verifying the coincidence of the identification code of the product which last modified the contents of the recording medium and its own product identification code to determine whether its manufacturer specific information is effective.

Another aspect of the invention provides a rewritable recording medium on which audio/video (A/V) contents are recordable, the medium including formatted information areas for the A/V contents and for manufacturer information to support manufacturer specific functions, wherein the manufacturer information area comprises an area for storing an identification code of the manufacturer of the recording apparatus that last modified the content of the recording medium.

Preferably, the manufacturer information area further comprises an area for storing an identification code of the product which last modified the content of the recording medium.

Another aspect provides a rewritable recording medium, on which A/V contents are stored, wherein the identification code of the manufacturer of the recording apparatus that has last modified the A/V content of the recording medium is stored.

For a better understanding of the invention, and to show how embodiments of the same may be carried into effect, reference will now be made, by way of example, to the accompanying diagrammatic drawings in which:
Figure 1 shows a one-dimensional structure of a general recording medium;
Figure 2 shows the file structure shown in Figure 1;
Figure 3 shows the contents of the information file shown in Figure 2;
Figure 4 is a block diagram of an optical recording and reproducing apparatus to which the present invention is applied;
Figure 5 is a table of an example showing detailed contents of a manufacturer information header for supporting a manufacturer specific function according to an embodiment of the present invention;
Figure 6 is a table of another example showing detailed contents of a manufacturer information header according to an embodiment of the present invention;
Figure 7 is a table showing the contents of a manufacturer information search pointer according to an embodiment of the present invention; and
Figure 8 is a table showing the contents of a manufacturer information item according to an embodiment of the present invention.

Hereinafter, a preferred embodiment of a recording medium and a recorder/ editor for storing manufacturer information for supporting specific functions of the manufacturer and a recorder/player for using manufacturer information for supporting specific functions of the manufacturer according to the present invention and preferred embodiments of a method therefor will be described.

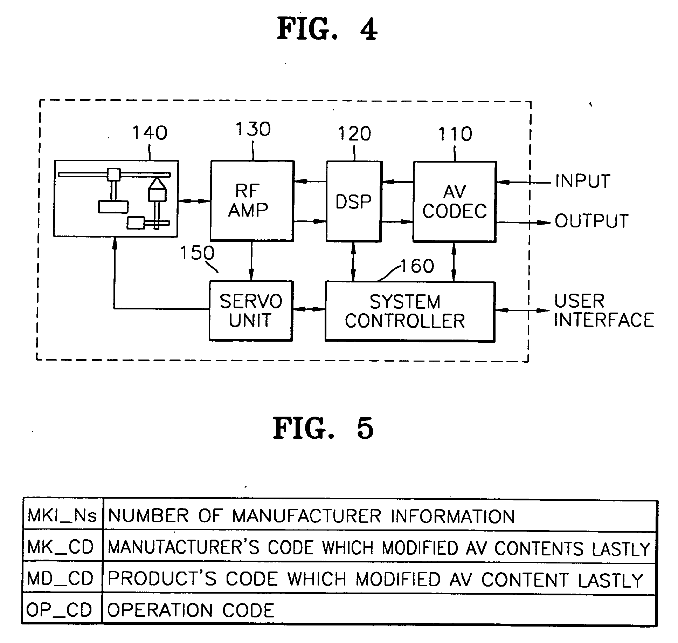

Figure 4 is a block diagram of an optical recording and reproducing apparatus to which the present invention is applied. The function of an apparatus for recording A/V data on and reproducing A/V data from a recordable and rewritable recording medium is divided into recording and reproducing.

During recording, an A/V codec 110 compression-codes an A/V signal input by a predetermined compression coding scheme. A digital signal processor 120 receives A/V data supplied from the A/V codec 110, adds parity data for an error correction code (ECC) process, and performs modulation by a predetermined modulation scheme. A radio frequency amplifier (RF AMP) 130 converts data supplied from the DSP 120 into an RF signal. A pick-up unit 140 drives a recording medium, records data corresponding to the RF signal from the RF AMP 130 on a recording medium, and includes an actuator for performing focusing and tracking. A servo 150 receives information required for controlling the servo from the RF AMP 130 and a system controller 160 and performs a stable servo operation. The system controller 160 controls the entire system, controls the A/V data to be recorded on the recording medium, and records information including information on the size and the position of the compressed data as well as manufacturer information on the recorder/editor performing the specific function, the recording/editing. Also, the system controller 160 determines whether the manufacturer information recorded on the recording medium is effective using the identification information on the recorder/editor performing the recording/editing functions by finally accessing the recording medium, and controls recording/editing operations using the determined manufacturer information.

During reproduction, the pick-up unit 140 provides an optical signal picked up from the recording medium in which data is stored. The RF AMP 130 converts the optical signal into an electrical signal and extracts the servo signal for performing the servo and the modulated data. The DSP 120 demodulates the modulated data supplied from the RF AMP 130 corresponding to the modulation scheme used upon modulation, corrects errors by performing ECC, and removes the parity data. The servo 150 receives information required for controlling the servo from the RF AMP 130 and the system controller 160 and performs a stable servo operation. The A/V codec 110 decodes the compressed A/V data supplied from the DSP 120 and outputs an A/V signal. The system controller 160 controls the entire system to reproduce data using the information recorded on the recording medium, performing a user interface, i.e., processing the key input of the user. Also, the system controller 160 determines whether the manufacturer information recorded on the recording medium is effective using the identification information on the recorder/editor performing the recording/editing functions by finally accessing the recording medium, and controls reproducing operations using the determined manufacturer information.

Figure 5 is an example of a table showing detailed contents included in a manufacturer information header for a manufacturer specific function according to embodiments of the present invention. The table can be comprised of (MKI_Ns) which is information on the number of manufacturer information items, a manufacturer identification code (MK_CD) showing the manufacturer of the recorder/the editor which finally modified the contents of the recording medium. Moreover the table can include a product code (MD_CD) showing the product model of the recorder/editor which finally modified the recording medium, and an operation code (OP_CD) expressed by a predetermined code showing information on an operation performed by the recorder/editor, for example, an operation of modifying A/V bitstream data on the recording medium by recording, editing, erasing, and a specific function other than simple reproduction.

The manufacturer identification code is for classifying different manufacturers, in which the respective manufacturers are expected to have unique values. Simple text data of the manufacturer's name can be used because it is very difficult to imagine that different manufacturers have the same name.

The operation code has compatibility since it must be understood by different manufacturers. The information on the recorder/editor performing the recording/editing by finally accessing the recording medium and the information on the performed operation are provided by recording such information on the manufacturer information header in each recorder/editor performing the recording/editing by accessing the recording medium. When only simple reproduction is performed, manufacturer identification information of the reproducing apparatus is not recorded on the manufacturer information header because there is no change in the contents of the recording medium.

Examples of using the manufacturer information using the above data structure are as follows. When the manufacturer A generates manufacturer information item and records information on the recording medium and the manufacturer B edits the recording medium in the recorder/editor, the recorder/editor of the manufacturer B records the identification code of the manufacturer B, the product code of the recorder/editor and the operation code showing information including that an editing operation has been performed on the manufacturer information header as shown in Figure 5, before ejecting the recording medium.

When the data recorded on the recording medium is overwritten, edited, and reproduced using the manufacturer information item by the recorder, editor, and player of the manufacturer A, the identification information on the manufacturer which finally used the recording medium, product information of the recorder/editor, and information on the operation performed in the manufacturer information header, it is determined whether the manufacturer information items to be used during recording, editing, and reproducing are effective.

If the manufacturer identification code recorded in the recording medium which identify the manufacturer that finally modified the recording medium is consistent with concerned recorder/editor/player's manufacturer identification code, it is determined that the concerned manufacturer information item is effective. If the manufacturer identification code recorded in the recording medium is not consistent with the concerned manufacturer identification code, it must be determined whether the manufacturer information items to be used are effective by analyzing the entire contents of the recording medium. When the manufacturer information items are effective, they can be used.

Also, when the recorder/editor which finally modified the recording medium are the current recorder/editor and the editing operation is finally performed, it is easily judged that the manufacturer information item for the manufacturer is effective since it is possible to update the manufacturer information item according to the recording/editing operation by analyzing the contents of the manufacturer information item corresponding to the modified contents. Accordingly, it is possible to reduce the time required to determine whether the manufacturer information items are effective. When the manufacturer information items are effective, it is possible to perform the recording, the editing, and/or reproduction using the manufacturer information items.

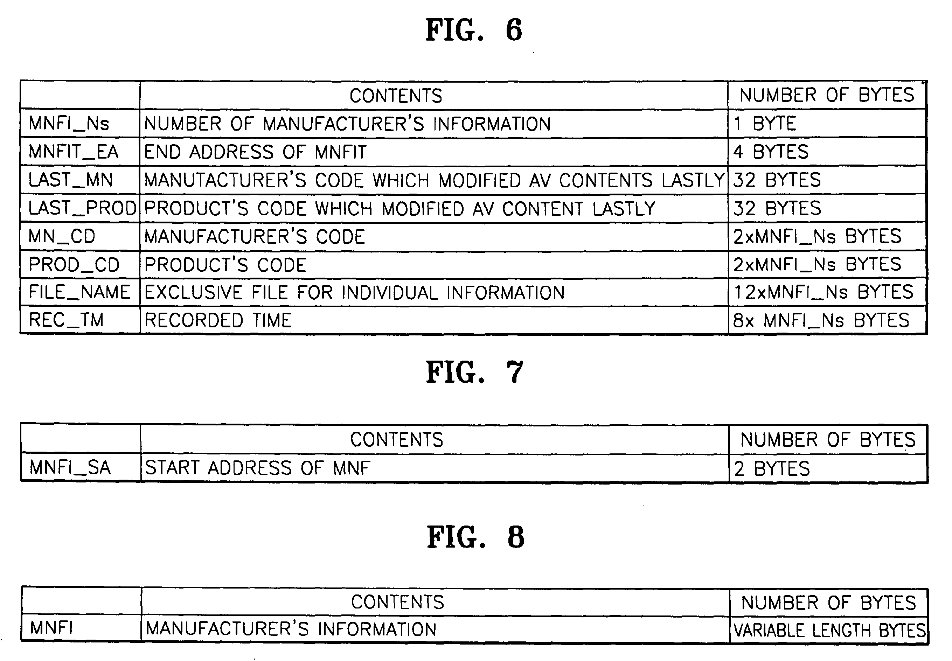

Figure 6 is another example of a manufacturer information header according to the present invention. In Figure 6, MNFI_Ns shows the number of manufacturer information items, MNFIT_EA shows the last address of a manufacturer information, LAST_MN shows an identification code of a manufacturer of which recorder/editor modified A/V contents last. LAST_PROD shows a code of a product in which the A/V contents are finally modified. MN_CD shows the manufacturer code corresponding to the number of manufacturer information items, PROD_CD shows the product codes of the respective manufacturer information items. FILE_NAME shows the file name of an additional file for individual information, and REC_TM shows the time in which individual information was recorded. The MN_CD and/or PROD_CD and/or FILE_NAME and/or REC_TM can be recorded in the beginning part of the respective manufacturer information items.

To restrict the size of manufacturer information, there is a maximum number of MNFI_Ns (for example, up to 5). When the number of items of manufacturer information items exceed the maximum number, the oldest records can be deleted. If the manufacturer information item has an additional file when the manufacturer information item is deleted, this file is also deleted. When a recorder/editor modifies the recording medium content and it has its own manufacturer information item, only the concerned manufacturer information is updated and other manufacturer information item should remain unchanged. When a recorder/editor modifies the recording medium content but it does not have its own manufacturer information item, even in this case, the identification code of the manufacturer which modifies the recording medium should be recorded.

MNFIT_EA is the last address of a manufacturer information, for example, having a relative block number (RBN) from the first byte position of the manufacturer information header. LAST_MN denotes a manufacturer identification code in which the A/V contents are finally modified. It is mandatory to have this recorded when the A/V contents are modified by the recorder/editor even if the recorder/editor does not have the manufacturer information item therefor. LAST_PROD made by the manufacturer denotes a product code in which the A/V contents are finally modified. It must be recorded when the recorder/editor modifies the A/V contents even if the recorder/editor does not have the manufacturer information item therefor. Since the manufacturer identification codes must be classified according to the respective manufacturers, they preferably have unique values according to the respective manufacturers. Also, since a manufacturer may have various products, it is recommended that the manufacturer manage the product codes.

Namely, a set in which the A/V contents are modified in order to make the information in relation to real A/V contents identical to A/V contents must record the manufacturer identification information in the manufacturer identification code field (LAST_MN) of the manufacturer information header even if there is no manufacturer information item of its own. Also, when the recording medium is inserted into a set, it must be checked whether the real A/V contents is identical to the manufacturer's information item which is specific to the manufacturer in relation to the A/V contents of the recording medium. The first and easiest way is to check the identification code of the manufacturer which modified the recording medium last. When the A/V contents are modified by other manufacturer's equipment, a concerned set must modify or update the information in relation to A/V contents.

MN_CD and PROD_CD are manufacturer codes and the product codes, as many as stored manufacturer information items, to indicate that each manufacturer information item belongs to which manufacturer and product. When the information for the manufacturer products exists in an additional file, FILE_NAME is the name of the file. If there is no file, the FILE_NAME is filled with a special value. REC_TM denotes the time when the information is recorded. MN_CD, REC_TM, PROD_CD, FILE_NAME can be recorded in the beginning part of the respective manufacturer information items.

Figure 7 includes MNFI_SA which is a table showing the contents of a manufacturer information search pointer and denotes the starting address of the manufacturer information item. The MNFI_SA is the starting address of the manufacturer information item, for example, having RBN from the first byte of the manufacturer information header.

Figure 8 is a table showing the contents of the manufacturer information items which has bytes of variable length. The maximum size of the information is, for example, 10 Kilobytes (KB). When the size of the information exceeds 10 KB, the additional information file of the manufacturer can be used.

As mentioned above, according to embodiments of the present invention, a recording medium is provided, which contains A/V data and formatted information to use the A/V data for recording and reproducing, and manufacturer information to support manufacturer specific function which cannot be implemented using the formatted information. Moreover, a manufacturer information is provided to support multiple manufacturer information items. Such information also contains the identification code of the manufacturer which last modified the contents of the recording medium. This information can be used to check the effectiveness of its own manufacturer information item when the recording medium is recorded, edited, reproduced by multiple equipment of different manufacturers since the manufacturer information item which is specific to the manufacturer can not be managed by other manufacturer's equipment. Accordingly, it is possible to reduce the time taken to determine whether the manufacturer information items are effective.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A recording medium readable by a recording and/or reproducing apparatus to record and/or edit content on the recording medium, the recording medium comprising:
formatted information for the content; and
manufacture information comprising identification information of a manufacturer of a recording apparatus that recorded or modified the content of the recording medium different from the identification information prior to the recording or the modification.

2. The recording medium of claim 1, comprising:
identification information indicating a product model of the recording apparatus that modified the content of the recording medium.

3. The recording medium of claim 1 or claim 2, wherein the identification information corresponds to the manufacturer of the recording apparatus that last modified the content of the recording medium.

4. The recording medium of any preceding claim, comprising:
product code information to indicate a product model of the recording apparatus that modified the content of the recording medium.

5. A method of recording and/or editing content on a data recording medium, comprising:
recording an identification information of a manufacturer of a recording apparatus that recorded or modified the content of the recording medium different from the identification information prior to the recording or the modification.

6. The method of claim 5, further comprising:
recording a product identification code of the recording apparatus of the manufacturer that modified the content of the recording medium by performing recording/editing on the recording medium.

7. The method of claim 5 or claim 6, wherein the identification information corresponds to the manufacturer of the recording apparatus that last recorded or modified the content of the recording medium.
